# EUROPÄISCHE PATENTSCHRIFT

(11) **EP 1 976 191 B1**
(45) Veröffentlichungstag und Bekanntmachung des Hinweises auf die Patenterteilung: **15.06.2011**
(21) Anmeldenummer: 08004886.1
(22) Anmeldetag: 15.03.2008
(51) Int. Cl.: H04L 12/28, H02G 15/10

(54) **Kabelmuffe**
Cable Coupling Box
Boîte de jonction pour câble

(30) Priorität: 26.03.2007 DE 202007004506 U
(43) Veröffentlichungstag der Anmeldung: 01.10.2008
(73) Patentinhaber: CCS Technology, Inc., Wilmington, DE 19803 (US)
(72) Erfinder: Knuth, Thomas, 10317 Berlin (DE); Heckenberger, Klaus, 10119 Berlin (DE)
(74) Vertreter: Sturm, Christoph

(56) Entgegenhaltungen:
- DE-A1- 4 300 177
- DE-C1- 3 831 649
- DE-U1-202006 001 572
- US-A1- 2003 086 561

## Beschreibung

Die Erfindung betrifft eine Kabelmuffe nach dem Oberbegriff des Anspruchs 1. Des Weiteren betrifft die Erfindung ein Nachrichtenkabelnetzwerk nach dem Oberbegriff des Anspruchs 2.

Kabelmuffen werden in Nachrichtenkabelnetzwerken zum Schutz von Spleißverbindungen an Verbindungsstellen von zwei Nachrichtenkabeln sowie zum Schutz von Abzweigstellen oder Aufteilungsstellen von Nachrichtenkabeln verwendet. Dabei müssen die Kabelmuffen die Kontinuität der Nachrichtenkabel so gewährleisten, als wären die Nachrichtenkabel nicht unterbrochen.

Aus dem Produktkatalog "Zubehör für LWL-Kabelnetze, Ausgabe 1, Seite 75, Corning Cable Systems, Jahr 2001" sind als Inline-Muffen sowie als Hauben-Muffen ausgebildete Kabelmuffen bekannt, die allesamt ein Gehäuse aufweisen, welches einen Innenraum der Kabelmuffe definiert und den Innenraum derselben nach außen abdichtet. Bei als Hauben-Muffen ausgebildeten Kabelmuffen wird das Gehäuse von einem haubenartigen Abdeckkörper und einem einzigen Dichtungskörper gebildet, über welchen sämtliche Kabel in den Innenraum der Kabelmuffe eingeführt werden können. Als Inline-Muffen ausgebildeten Kabelmuffen verfügen hingegen über zwei Dichtungskörper zum Einführen von Kabeln in den Innenraum der Kabelmuffe, so dass Inline-Muffen in einer Linie mit den Kabeln installiert werden können. In dem durch das Gehäuse der Kabelmuffe definierten Innenraum sind üblicherweise Baugruppen zum Verbinden, nämlich zum Spleißen, von in den Nachrichtenkabeln geführten Nachrichtenleitern angeordnet.

Aus der DE 20 2006 001 572 ist es bereits bekannt, in einem Nachrichtenkabelnetzwerk, das sowohl der Übertragung niederfrequenter Sprachsignale als auch der Übertragung hochfrequenter Datensignale dient, eine elektronische Einheit, nämlich Baugruppen eines sogenannten DSLAM (Digital Subscriber Line Access Multiplexer), die üblicherweise in einer Vermittlungsstelle mit großem Abstand zu den Teilnehmern angeordnet sind, aus der Vermittlungsstelle zu verlagern und unterirdisch in der Nähe der Teilnehmer zu installieren. Hierdurch ist es möglich, im Nachrichtenkabelnetzwerk Daten mit größer Bandbreite und höherer Frequenz zu übertragen.

Dann, wenn das aus der DE 20 2006 001 572 bekannte Nachrichtenkabelnetzwerk zur Versorgung einer größeren Anzahl von Teilnehmern angepasst werden soll, müssen mehrere DSLAM-Einheiten unterirdisch installiert werden. Die DSLAM-Einheiten müssen dann, damit dieselben an ein gemeinsames Lichtwellenleiterkabel angeschlossen werden können, über eine sogenannte Ethernet-Schalteinrichtung miteinander verbunden werden. Dies ist aufwendig und teuer.

Hiervon ausgehend liegt der vorliegenden Erfindung das Problem zu Grunde, eine neuartige Kabelmuffe sowie ein neuartiges Nachrichtenkabelnetzwerk zu schaffen. Dieses Problem wird dadurch gelöst, dass die eingangs genannte Kabelmuffe durch die Merkmale des kennzeichnenden Teils des Anspruchs 1 weitergebildet ist.

Aus der DE 43 00 177 A1 ist eine Kabelmuffe mit den Merkmalen des Oberbegriffs des Patentanspruchs 1 bekannt. Die dort offenbarte Kabelmuffe verfügt über Einführungsbereiche für Kabel und über eine elektronische Einheit, die in einem Innenraum der Kabelmuffe, der von einem Gehäuse derselben definiert wird, positioniert ist. Die im Innenraum der Kabelmuffe angeordnete elektronische Einheit umfasst eine Leiterplatine mit Übertragungselementen, die zur Bereitstellung unterschiedlicher Schaltungen und Abzweige ausgewechselt werden können.

Aus der DE 38 31 649 C1 ist eine Schrumpfmuffe mit einer Kabelpeitsche bekannt, der eine Kupplung zugeordnet ist.

Die US 2003/0086561 A1 offenbart ein Nachrichtenkabelnetzwerk mit einer Vermittlungsstelle und einem Teilnehmer, wobei in der Vermittlungsstelle ein JWI-Verteilerschrank und ein Gehäuse, welches eine Multiplexer-Einheit aufnimmt, positioniert sind. Zwischen dem JWI-Verteilerschrank und dem den Multiplexer aufnehmenden Gehäuse verlaufen Jumperdrähte bzw. Jumperkabel.

Mit der erfindungsgemäßen Kabelmuffe ist es erstmals möglich, in einem Nachrichtenkabelnetzwerk unterirdisch installierte DSLAM-Einheiten, die in erfindungsgemäßen Kabelmuffen angeordnet sind, im Sinne einer Kaskadierung zu verschalten, so dass mehrere DSLAM-Einheiten, ohne zusätzliche Ethernet-Schalteinrichtung über ein gemeinsames Lichtwellenleiterkabel versorgt werden können. Hierdurch wird es erstmals möglich DSLAM-Einheiten, unterirdisch sowie in der Nähe der Teilnehmer bei gleichzeitiger Gewährleistung einer flexiblen Erweiterung des Nachrichtenkabelnetzwerks zu installieren.

Das erfindungsgemäße Nachrichtenkabelnetzwerk ist im unabhängigen Anspruch 2 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:

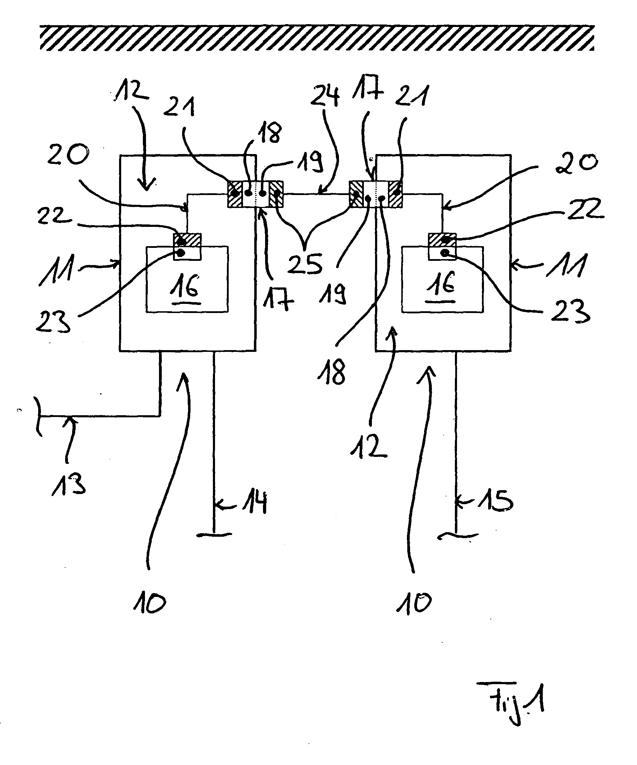

- Fig. 1:: einen schematisierten Ausschnitt aus einem erfindungsgemäßen Nachrichtenkabelnetzwerk im Bereich von zwei erfindungsgemäßen, unterirdisch installierten Kabelmuffen.

Fig. 1 zeigt einen schematisierten Ausschnitt aus einem erfindungsgemäßen Nachrichtenkabelnetzwerk im Bereich von zwei erfindungsgemäßen, unterirdisch installierten Kabelmuffen 10. Jede der Kabelmuffen 10 verfügt über ein Gehäuse 11, welches einen Einführbereich für Kabel aufweist. Der Einführbereich des Gehäuses 11 jeder Kabelmuffe 10 dient der Einführung von Kabeln von außen in einen durch das Gehäuse 11 begrenzten Innenraum 12 der Kabelmuffe 10 bzw. der Ausführung von Kabeln aus dem Innenraum 12 der jeweiligen Kabelmuffe 10 heraus.

Gemäß Fig. 1 wird in den Innenraum 12 der in Fig. 1 gezeigten linken Kabelmuffe 10 ein Lichtwellenleiterkabel 13 eingeführt. Aus beiden Kabelmuffen 10 werden zu Teilnehmern führende Kupferkabel 14 bzw. 15 herausgeführt.

Im Innenraum 12 der in Fig. 1 dargestellten Kabelmuffen 10 ist jeweils eine als DSLAM-Einheit 16 ausgebildete elektronische Einheit angeordnet. Bei einer DSLAM-Einheit handelt es sich um eine Multiplexer-Einheit. Das Gehäuse 11 jeder Kabelmuffe 10 verfügt über mindestens eine Schnittstelle 17, wobei jede Schnittstelle 17 ein vom jeweiligen Innenraum 12 aus zugängliches Anschlusselement 18 sowie ein von außen zugängliches Anschlusselement 19 aufweist.

Mit dem vom Innenraum 12 der jeweiligen Kabelmuffe 10 zugänglichen Anschlusselement 18 der Schnittstellen 17 des Gehäuses 11 beider Kabelmuffen 10 ist jeweils die in dem Innenraum 12 der jeweiligen Kabelmuffe 10 positionierte DSLAM-Einheit 16 gekoppelt, nämlich über ein im Innenraum 12 der jeweiligen Kabelmuffe 10 verlaufendes Kabel 20.

So kann Fig. 1 entnommen werden, dass jedes im Innenraum 12 der Kabelmuffe 10 verlaufende Kabel 20 an beiden Enden über Steckerelemente 21 bzw. 22 verfügt, wobei die einem ersten Ende der Kabel 20 zugeordneten Steckerelemente 21 an die vom Innenraum 12 der jeweiligen Kabelmuffe 10 aus zugänglichen Anschlusselemente 18 der Schnittstellen 17 angeschlossen sind, und wobei die einem zweiten Ende der Kabel 20 zugeordneten Steckerelemente 22 an eine Schnittstelle 23 der jeweiligen DSLAM-Einheit 16 angeschlossen sind.

Gemäß Fig. 1 verläuft zwischen den beiden Schnittstellen 17 der beiden Kabelmuffen 10, die dem Gehäuse 11 der jeweiligen Kabelmuffe 10 zugeordnet sind, ein weiteres Kabel 24, um die in den unterschiedlichen Kabelmuffen 10 angeordneten DSLAM-Einheiten 16 im Sinne einer Kaskadierung miteinander zu verbinden. Das Kabel 24 verläuft außerhalb der Kabelmuffen 10.

So verfügt das Kabel 24 an sich gegenüberliegenden Enden über Steckerelemente 25, die an die von außen zugänglichen Anschlusselemente 19 der Schnittstellen 17, die den Gehäusen 11 der Kabelmuffen 10 zugeordnet sind, angreifen.

In Fig. 1 sind ausschließlich zwei DSLAM-Einheiten 16, die in unterirdisch installierten Kabelmuffen 10 angeordnet sind, im Sinne einer Kaskadierung verschaltet. Ebenso ist es möglich, eine größere Anzahl von DSLAM-Einheiten, die jeweils in einer unterirdisch installierten Kabelmuffe angeordnet sind, zu kaskadieren, wobei dann je Kabelmuffe 10 eine größere Anzahl von Schnittstellen 17 sowie je DSLAM-Einheit 16 eine größere Anzahl von Schnittstellen 23 bereitgehalten wird.

Im Sinne der Fig. 1 weist demnach eine unterirdisch installierte Kabelmuffe 10 einen Innenraum 12 zur Aufnahme einer DSLAM-Einheit 16 auf, wobei einem den Innenraum 12 nach außen begrenzenden Gehäuse 11 der Kabelmuffe 10 mindestens eine Schnittstelle 17 zugeordnet ist. An die Schnittstelle 17 ist von innen die DSLAM-Einheit 16 angeschlossen. Von außen ist an die Schnittstelle 17 der Kabelmuffe 10 eine DSLAM-Einheit 16 einer weiteren unterirdisch installierten Kabelmuffe 10 anschließbar, und zwar über ein Kabel 24, dass zwischen den Kabelmuffen verläuft.

Im Unterschied zu dem in Fig. 1 gezeigten Ausführungsbeispiel ist es auch möglich, dass eine Schnittstelle einer Kabelmuffe einem ersten Ende eines Kabel zugeordnet ist, welches mit einem zweiten Ende an eine in dem Innenraum der Kabelmuffe positionierte elektronische Einheit angeschlossen ist, und welches sich durch den Einführbereich des Gehäuses erstreckt. Die Schnittstelle ist dann nicht dem Gehäuse der Kabelmuffe zugeordnet, sondern vielmehr au-ßerhalb des Gehäuses positioniert. An diese Schnittstelle ist dann ein erstes Ende eines weiteren Kabels, welches mit einem zweiten Ende an eine in einem Innenraum einer weiteren Kabelmuffe positionierte elektronische Einheit angeschlossen ist, anschließbar, um die elektronischen Einheiten zu kaskadieren.

### Bezugszeichenliste

- 10: Kabelmuffe
- 11: Gehäuse
- 12: Innenraum
- 13: Lichtwellenleiterkabel
- 14: Kupferkabel
- 15: Kupferkabel
- 16: Multiplexer-Einheit / DSLAM-Einheit
- 17: Schnittstelle
- 18: Anschlusselement
- 19: Anschlusselement
- 20: Kabel
- 21: Steckerelement
- 22: Steckerelement
- 23: Schnittstelle
- 24: Kabel
- 25: Steckerelement

## Patentansprüche

1. Kabelmuffe, nämlich unterirdisch installierbare Kabelmuffe, mit einem Gehäuse (11), das einen Innenraum (12) der Kabelmuffe begrenzt und die Kabelmuffe nach außen abdichtet, wobei das Gehäuse (11) mindestens einen Einführbereich aufweist, welcher der Einführung von Kabeln in den Innenraum der Kabelmuffe bzw. der Ausführung von Kabeln aus dem Innenraum der (12) Kabelmuffe dient, wobei der Innenraum (12) der Kabelmuffe der Aufnahme mindestens einer Verbindungsstelle oder Abzweigstelle oder Aufteilungsstelle der Kabel dient, und wobei in dem Innenraum (12) der Kabelmuffe mindestens eine elektronische Einheit (16) angeordnet ist, **dadurch gekennzeichnet, dass**
a) das Gehäuse (11) der Kabelmuffe mindestens eine Schnittstelle (17) mit einem vom Innenraum (12) der Kabelmuffe aus zugänglichen Anschlusselement (18) sowie einem von außen zugänglichen Anschlusselement (19) aufweist;
b) die oder jede in dem Innenraum (12) der Kabelmuffe positionierte, als Multiplexer-Einheit ausgebildete elektronische Einheit (16) über ein im Innenraum der Kabelmuffe verlaufendes Kabel (20) an das vom Innenraum zugängliche Anschlusselement (18) der Schnittstelle (17) der Kabelmuffe angeschlossen ist, und dass an das von außen zugängliche Anschlusselement (19) der Schnittstelle der Kabelmuffe ein erstes Ende eines Kabels (24) anschließbar ist, welches mit einem zweiten Ende an ein von außen zugänglichen Anschlusselement einer Schnittstelle einer weiteren Kabelmuffe anschließbar ist, um mindestens eine in der anderen Kabelmuffe positionierte, als Multiplexer-Einheit ausgebildete elektronische Einheit mit der oder jeder im Innenraum (12) der Kabelmuffe positionierten, als Muttiplexer-Einheit ausgebildeten elektronischen Einheit (16) zu kaskadieren.

2. Nachrichtenkabelnetzwerk zur Übertragung von hochfrequenten Datensignalen und niederfrequenten Sprachsignalen, mit einer einen Hauptverteiler und ein Vermittlungssystem umfassenden Vermittlungsstelle, mit mehreren mit dem Hauptverteiler verbundenen Teilnehmern, wobei zwischen dem Hauptverteiler und den Teilnehmern Nachrichtenkabel verlaufen, und mit mehreren Kabelmuffen (10) zum Schutz von Verbindungsstellen oder Abzweigstellen oder Aufteilungsstellen des Nachrichtenkabelnetzwerks, wobei jede Kabelmuffe (10) ein Gehäuse (11) aufweist, das mindestens einen Einführbereich aufweist, welcher der Einführung von Kabeln in einen Innenraum (12) der Kabelmuffe bzw. der Ausführung von Kabeln aus dem Innenraum (12) der Kabelmuffe dient, und wobei in dem Innenraum (12) mehrerer Kabelmuffen (10) jeweils mindestens eine elektronische Einheit (16) angeordnet ist, **dadurch gekennzeichnet, dass**
a) die Gehäuse (11) derjenigen Kabelmuffen (10), in deren Innenraum jeweils mindestens eine als Multiplexer-Einheit ausgebildete elektronische Einheit (16) angeordnet ist, jeweils mindestens eine Schnittstelle (17) mit einem vom Innenraum (12) der jeweiligen Kabelmuffe aus zugänglichen Anschlusselement (18) sowie einem von außen zugänglichen Anschlusselement (19) aufweisen,
b) jede der in den Innenräumen der Kabelmuffen positionierten, als Multiplexer-Einheit ausgebildeten elektronischen Einheiten (16) jeweils über ein im Innenraum (12) der jeweiligen Kabelmuffe (10) verlaufendes Kabel (20) an das vom Innenraum zugängliche Anschlusselement (18) der Schnittstelle (17) der jeweiligen Kabelmuffe (10) angeschlossen ist, und dass an die von außen zugänglichen Anschlusselemente (19) der Schnittstellen der jeweiligen Kabelmuffen (10) ein erstes Ende eines außerhalb der Kabelmuffen verlaufenden Kabels (24) angeschlossen ist, welches mit einem zweiten Ende an ein von außen zugänglichen Anschlusselement einer Schnittstelle einer weiteren Kabelmuffe angeschlossen ist, um die in den unterschiedlichen Kabelmuffen (10) positionierten, als Multiplexer-Einheit ausgebildeten elektronischen Einheiten (16) zu kaskadieren.

## Claims

1. Cable sleeve, namely cable sleeve which can be installed below ground, with a housing (11), which delimits an interior (12) of the cable sleeve and seals off the cable sleeve from the outside, the housing (11) having at least one insertion region, which is used for inserting cables into the interior of the cable sleeve or for passing cables out of the interior (12) of the cable sleeve, the interior (12) of the cable sleeve being used to accommodate at least one connection point or branch point or splitting point of the cables, and at least one electronic unit (16) being arranged in the interior (12) of the cable sleeve, **characterized in that**
a) the housing (11) of the cable sleeve has at least one interface (17) with a connection element (18), which is accessible from the interior (12) of the cable sleeve, and a connection element (19) which is accessible from the outside;
b) the or each electronic unit (16), which is in the form of a multiplexer unit, and is positioned in the interior (12) of the cable sleeve, is connected to that connection element (18) of the interface (17) of the cable sleeve which is accessible from the interior via a cable (20), running in the interior of the cable sleeve, and **in that** a first end of a cable (24) can be connected to that connection element (19) of the interface of the cable sleeve which is accessible from the outside, it being possible for said cable to be connected at a second end to a connection element of an interface of a further cable sleeve which is accessible from the outside in order to cascade at least one electronic unit, which is in the form of a multiplexer unit and is positioned in the other cable sleeve, with the or each electronic unit (16), which is in the form of a multiplexer unit and is positioned in the interior (12) of the cable sleeve.

2. Telecommunications cable network for transmitting radiofrequency data signals and low-frequency voice signals, with a central office comprising a main switchboard and a switching system, with a plurality of subscribers connected to the main switchboard, wherein telecommunication cables run between the main switchboard and the subscribers, and with a plurality of cable sleeves (10) for protecting connection points or branch points or splitting points of the telecommunications cable network, with each cable sleeve (10) having a housing (11), which has at least one insertion region, which is used for inserting cables into an interior (12) of the cable sleeve or for passing cables out of the interior (12) of the cable sleeve, and in each case at least one electronic unit (16) being arranged in the interior (12) of a plurality of cable sleeves (10), **characterized in that**
a) the housings (11) of those cable sleeves (10) which have in each case at least one electronic unit (16) in the form of a multiplexer unit arranged in the interior thereof have in each case at least one interface (17) with a connection element (18), which is accessible from the interior (12) of the respective cable sleeve, and a connection element (19), which is accessible from the outside,
b) each of the electronic units (16) which are in the form of multiplexer units and are positioned in the interiors of the cable sleeves is connected to that connection element (18) of the interface (17) of the respective cable sleeve (10) which is accessible from the interior via a cable (20) running in the interior (12) of the respective cable sleeve (10), and **in that** a first end of a cable (24) running outside the cable sleeves is connected to those connection elements (19) of the interfaces of the respective cable sleeves (10) which are accessible from the outside, said cable being connected at a second end to a connection element of an interface of a further cable sleeve which is accessible from the outside in order to cascade the electronic units (16), which are in the form of multiplexer units and are positioned in the different cable sleeves (10).

## Revendications

1. Manchon de câble, plus précisément manchon de câble pouvant être posé enterré, comprenant un boîtier (11) qui délimite un espace intérieur (12) du manchon de câble et rend le manchon de câble étanche par rapport à l'extérieur, le boîtier (11) présentant au moins une zone d'introduction qui sert à l'introduction de câbles dans l'espace intérieur du manchon de câble ou à la sortie de câbles depuis l'espace intérieur (12) du manchon de câble, l'espace intérieur (12) du manchon de câble servant à accueillir au moins un point de connexion ou un point de dérivation ou un point de distribution du câble et au moins une unité électronique (16) étant disposée dans l'espace intérieur (12) du manchon de câble, **caractérisé en ce que**
a) le boîtier (11) du manchon de câble présente au moins une interface (17) avec un élément de raccordement (18) accessible depuis l'espace intérieur (12) du manchon de câble ainsi qu'un élément de raccordement (19) accessible depuis l'extérieur ;
b) la ou chaque unité électronique (16) positionnée dans l'espace intérieur (12) du manchon de câble et réalisée sous la forme d'un multiplexeur est raccordée à l'élément de raccordement (18) accessible depuis l'espace intérieur de l'interface (17) du manchon de câble par le biais d'un câble (20) qui s'étend dans l'espace intérieur du manchon de câble et **en ce qu'**une première extrémité d'un câble (24) peut être raccordée à l'élément de raccordement (19) accessible depuis l'extérieur de l'interface du manchon de câble, lequel peut être raccordé par une deuxième extrémité à un élément de raccordement accessible depuis l'extérieur d'une interface d'un autre manchon de câble afin de réaliser le branchement en cascade d'au moins une unité électronique (16) positionnée à l'intérieur de l'autre manchon de câble et réalisée sous la forme d'un multiplexeur avec celle ou chacune de celles positionnées dans l'espace intérieur (12) du manchon de câble et réalisées sous la forme d'un multiplexeur.

2. Réseau de câbles de télécommunications destiné à la transmission de signaux de données à haute fréquence et de signaux vocaux à basse fréquence, comprenant un répartiteur principal et un centre de commutation comprenant un système de commutation, comprenant plusieurs abonnés reliés avec le répartiteur principal, des câbles de télécommunications s'étendant entre le répartiteur principal et les abonnés, et comprenant plusieurs manchons de câble (10) pour protéger les points de connexion ou les points de dérivation ou les points de distribution du réseau de câbles de télécommunications, chaque manchon de câble (10) présentant un boîtier (11) qui présente au moins une zone d'introduction qui sert à l'introduction de câbles dans un espace intérieur (12) du manchon de câble ou à la sortie de câbles depuis l'espace intérieur (12) du manchon de câble et au moins une unité électronique (16) étant à chaque fois disposée dans l'espace intérieur (12) de plusieurs manchons de câble (10), **caractérisé en ce que**
a) les boîtiers (11) des manchons de câble (10) dans l'espace intérieur desquels est à chaque fois disposée au moins une unité électronique (16) réalisée sous la forme d'un multiplexeur présentent à chaque fois au moins une interface (17) avec un élément de raccordement (18) accessible depuis l'espace intérieur (12) du manchon de câble correspondant ainsi qu'un élément de raccordement (19) accessible depuis l'extérieur ;
b) chacune des unités électroniques (16) positionnées dans les espaces intérieurs des manchons de câble et réalisées sous la forme d'un multiplexeur est à chaque fois raccordée à l'élément de raccordement (18) accessible depuis l'espace intérieur de l'interface (17) du manchon de câble (10) correspondant par le biais d'un câble (20) qui s'étend dans l'espace intérieur (12) du manchon de câble (10) correspondant et **en ce qu'**une première extrémité d'un câble (24) qui s'étend à l'extérieur des manchons de câble est raccordée aux éléments de raccordement (19) accessibles depuis l'extérieur des interfaces des manchons de câble (10) correspondants, lequel est raccordé par une deuxième extrémité à un élément de raccordement accessible depuis l'extérieur d'une interface d'un autre manchon de câble afin de réaliser le branchement en cascade des unités électroniques (16) positionnées dans les différents manchons de câble (10) et réalisées sous la forme d'un multiplexeur.
